# EUROPEAN PATENT APPLICATION

(11) **EP 4 321 723 A2**
(43) Date of publication of application: **14.02.2024**
(21) Application number: 23210112.1
(22) Date of filing: 29.11.2018
(51) Int. Cl.: E06B 9/78

(54) **ROLLER SHADE ASSEMBLY**

(30) Priority: 29.11.2017 US 201762592038 P; 15.02.2018 US 201862630871 P
(62) Divisional of application: 18883873.4
(71) Applicant: Smart Shade Innovations Inc., Chatham, Ontario N7M 5W7 (CA)
(72) Inventor: MEYERINK, Larry, Dresden, Ontario N0P 1M0 (CA); BATTE, Anthony, Glencoe, Ontario N0L 1M0 (CA); GRUBB, Dean, Appin, Ontario N0L 1A0 (CA); MEYERINK, Alex, Chatham, Ontario N7M 0R1 (CA)
(74) Representative: Zeuner Summerer Stütz

(57) **Abstract**

A clip for attachment to the free end of the sheet material of a roller shade assembly, comprising, two opposing sections that extend along the free end of the sheet material and are shaped complementary to one another so as to lock together to form a grip portion, and wherein the grip portion grips the free end of the sheet material and retains it in the grip portion of the clip.

## Description

### Field of the Invention

The present invention relates to window coverings, in particular, to a roller shade assembly.

### Background

Roller shades are typically operated by chain drive assemblies or other similar mechanisms, that are attached to one end of the roller tube of the roller shade. These components require space between the end of the roller tube and the adjacent side of the window opening. Roller shades are often used for room darkening or privacy control, including in so called "blackout" applications, where it is desirable to block substantially all of the light entering a room through a window. In these applications, it is important for the roller shade fabric to cover as much of the window opening as possible. Accordingly, there is a need to minimize the space required for the mechanical components of the roller shade between the fabric of the roller shade and the sides of the window opening.

Another common problem with roller shades is the "telescoping" of the fabric on the roller tube. The term "telescoping" refers to the improper winding of the fabric on the roller tube that occurs because of a misalignment of the fabric on the roller, causing each successive layer of fabric to become offset to one side relative to the layer below. "Telescoping" can cause damage to the fabric and interfere with the operation of the roller shade.

Unwanted gaps between the fabric of the roller shade and the window opening may also occur at the bottom of the window opening, due to an angled window sill or improperly cut fabric on the roller shade. These gaps also reduce the effectiveness of the roller shade in blocking light from the window. Accordingly, there is a need to minimize or eliminate gaps at the bottom of the window opening.

### Summary of the Invention

A roller shade assembly, according to the present invention, is installed in a window opening and has a frame with opposing first and second ends attached within the window opening. A roller is rotatably mounted to the frame with opposing ends, a rotational axis, and a first gear coaxially attached to one end of the roller. A drive assembly is attached to the frame between the first and second ends, having a second gear that is selectively rotatable and is operatively engaged with the first gear for imparting rotational motion from the drive assembly to the roller.

In another embodiment, the frame has a first end cap at the first end, a second end cap at the second end, and a cover extending between the first and second end caps. The cover has a top and at least one side and the drive assembly is attached to one side of the cover.

In another embodiment, the first gear is substantially perpendicular to the second gear.

In another embodiment, a fabric retaining assembly is mounted to the frame between the first and second end so as to rest on the roller and has a press bar attached thereto extending parallel to the roller along substantially the entire length of the roller.

In another embodiment, a sheet material is rolled on the roller with a fixed end attached to the roller and a free end having a weight attached thereto. A bottom bar extends along the free end of the sheet material and has a channel extending the length of the bottom bar with an upper end and the weight is loosely retained within the channel. The channel is sized to permit the weight to move within the channel and the upper end of the channel is sized to prevent the weight from exiting the channel.

In another embodiment, the weight is a clip having two opposing sections that are shaped complementary to one another so as to lock together to form a grip portion that grips the free end of the sheet material and retains it within the grip portion of the weight.

### Brief Description of the Drawings

In order that the invention may be more clearly understood, embodiments thereof will now be described in detail by way of example, with reference to the accompanying drawings, in which:
Figure 1 is an exploded view of a roller shade assembly, according to the present invention.
Figure 2 is an exploded detail view, showing the first and second gears and drive assembly at one end of the roller shade assembly.
Figure 3 is a perspective detail view of the elements of the roller shade assembly, shown in Figure 2.
Figure 4 is a perspective detail view of the roller and the first and second gears of the roller shade assembly.
Figure 5 is a side sectional view of the roller shade assembly.
Figure 6A is an exploded view of the bottom bar of the roller shade assembly.
Figure 6B is an exploded view of another embodiment of the bottom bar of the roller shade assembly.
Figure 7A is a side sectional view of the bottom bar, shown in Figure 6A.
Figure 7B is a side sectional view of the bottom bar, shown in Figure 6B.
Figure 8 is a side view of another embodiment of the bottom bar of the roller shade assembly.
Figure 9 is a perspective detail view of another embodiment of the elements of the roller shade assembly, shown in Figures 3.
Figure 10 is an exploded detail view of the drive assembly, shown in Figure 9.
Figure 11 is a side sectional view of a clip of the roller shade assembly, shown partially wrapped in fabric.
Figures 12A-K are side sectional view of various embodiments of the clip of the roller shade assembly.

### Description of the Invention

The roller shade assembly, according to the present invention, minimizes the unwanted gaps of uncovered area of the window opening. The mechanical components of the roller shade assembly are arranged so as to minimize the number of components located between the end of the roller and the window opening, thereby reducing the amount of space required between the end of the roller and the window opening. This permits the roller to be sized more closely to the width of the window opening, thereby minimizing unwanted gaps along the sides of the window opening.

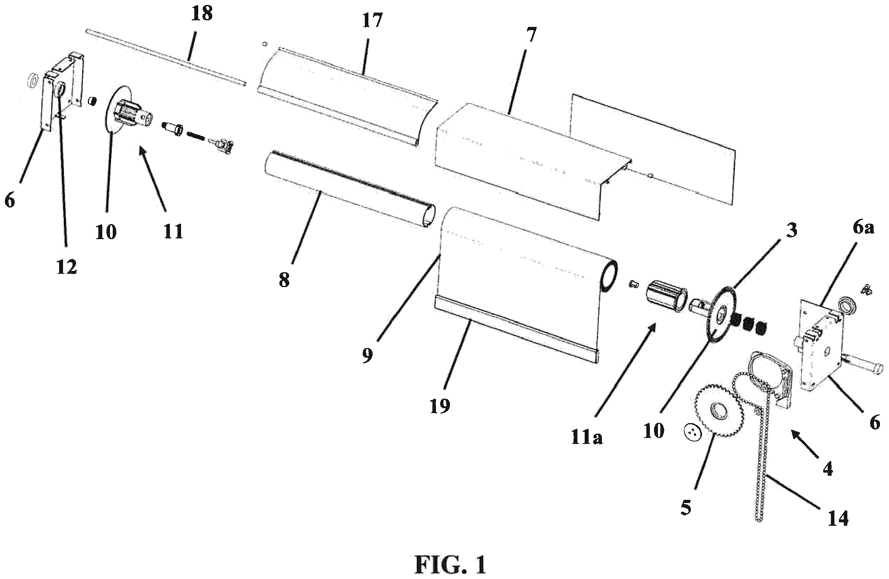

As shown in Figure 1 , the roller shade assembly has a frame 1, a roller 2 having a first gear 3, and a drive assembly 4 having a second gear 5 that is operatively engaged with the first gear 3. The frame 1 is attached within the window opening to both opposing sides of the window opening at or adjacent the top of the window opening to permit the roller shade assembly to selectively cover substantially the entire window opening. The frame 1 has two end caps 6, which are attached to the opposing sides of the window opening, and a cover 7 extending between the end caps 6. The cover 7 is preferably an L-shaped cover that extends across the top and rear of the roller shade assembly, but may also be a U-shaped cover that also extends across the front of the roller shade assembly.

The roller 2 is a roller tube 8 with a length of sheet material, or fabric 9, rolled thereon. The roller 2 is rotatably mounted to the frame 1 and has opposing ends and a rotational axis, about which the roller 2 rotates to wind and unwind the fabric 9 on the roller tube 8. At each end of the roller tube 8 is a fabric retaining flange, or collar 10, which extends radially outwardly from the roller 2 to retain the fabric 9 in alignment on the roller tube 8. The collars 10 act as guides for the fabric 9 and assist in reducing or preventing"telescoping" of the fabric 9 on the roller tube 8 as the fabric 9 is repeatedly wound and unwound on the roller 2. The collars 10 are disc-shaped flanges that are preferably formed integrally with the end plugs 11 inserted into each end of the roller tube 8. The end plugs 11 at each end of the roller 2 are mounted to the inside of the end caps 6 by way of bearings 12, to permit free rotation of the roller 2 relative to the frame 1. Alternatively, one or both end plugs 11 may have a recess formed therein that fits onto a pin extending inwardly from the adjacent end cap 6, to permit the roller 2 to rotate about the pin.

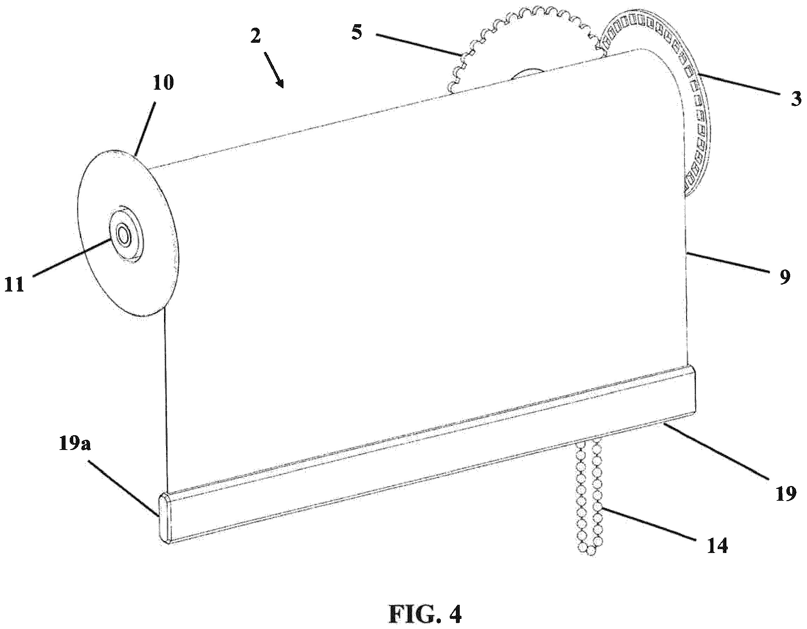

As shown in Figures 1 and 4, a first gear 3 is attached coaxially to one end of the roller 2. Preferably, the first gear 3 is formed integrally with the collar 10, so as to minimize the space required between the end of the roller 2 and the adjacent end cap 6. Preferably, the first gear 3 is a disc-shaped gear with a plurality of slots adjacent its perimeter for receiving and engaging with the teeth of another gear, such as a spur gear. Alternatively, the first gear 3 may be another type of gear, such as a disc-shaped spur gear. Optionally, the end plug 11 on which the first gear 3 is attached, or formed, may include a clutch 11a that permits limited relative motion between the first gear 3 and the roller 2, so as to prevent damage to the components of the roller shade assembly, such as the drive assembly 4, if it is operated roughly or improperly.

As shown in Figures 1 and 4, one end of the roller 2 is rotatably mounted to the frame 1 so as to freely rotate relative to the frame 1, while the other end of the roller 2 is rotatably mounted to the frame 1 and is engaged with a drive assembly 4 via the first gear 3 to selectively drive rotation of the roller 2. The drive assembly 4 is attached to the frame 1 between the opposing ends of the frame 1. Preferably, the drive assembly 4 is a chain drive assembly 4 attached to a flange 6a that extends inwardly from one of the end caps 6 at the front of the roller shade assembly, to permit easy access to the chain when the fabric 9 is covering the window opening. Alternatively, the chain drive assembly 4 may be attached to the frame 1 anywhere where it may be operatively engaged with the first gear 3 and where it will not occupy any space between the end of the roller 2 and the end cap 6.

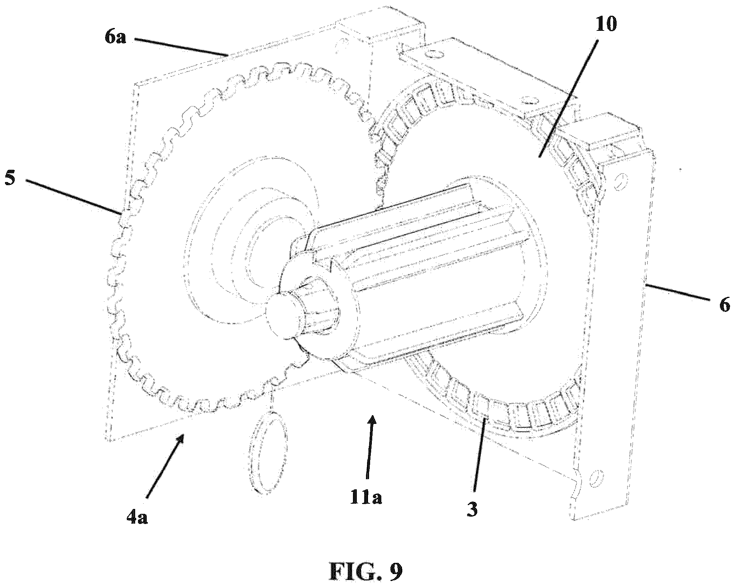

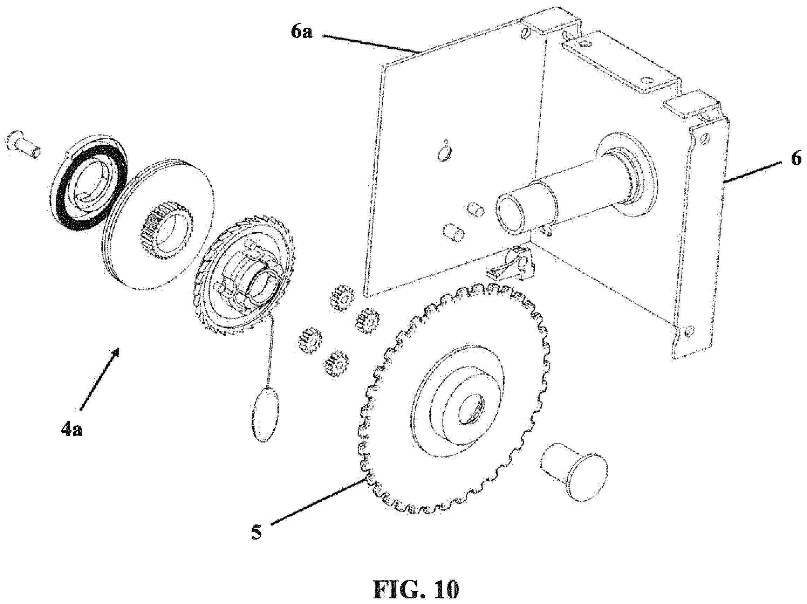

The chain drive assembly 4 has a chain 14 and a second gear 5 that rotates in response to the movement of the chain 14. The chain 14 is an endless chain that is looped through the chain drive assembly 4 and is operatively engaged with the second gear 5, for example by way of a sprocket adjacent to and rotationally fixed to the second gear 5. Guide rollers 16 may be positioned within the chain drive assembly 4 to facilitate a smooth pulling motion of the chain 14. Alternatively, as shown in Figures 9 and 10, the chain drive assembly 4 may be replaced with a ratchet-style retractable cord drive assembly 4a or a motorized drive assembly.

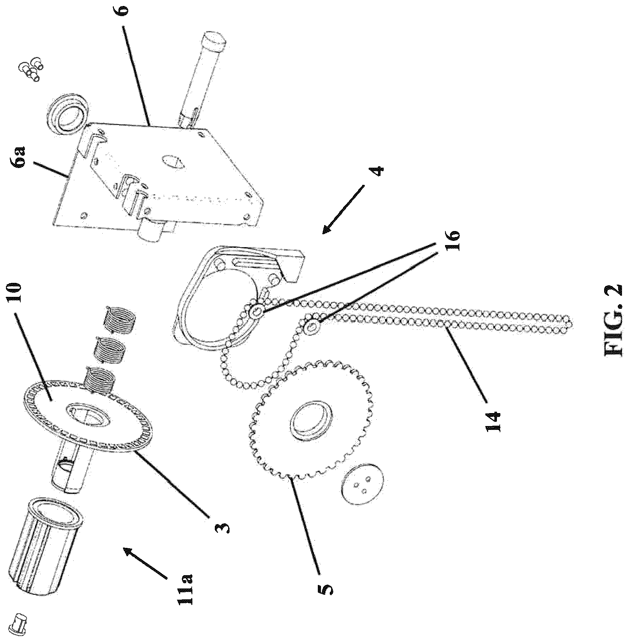

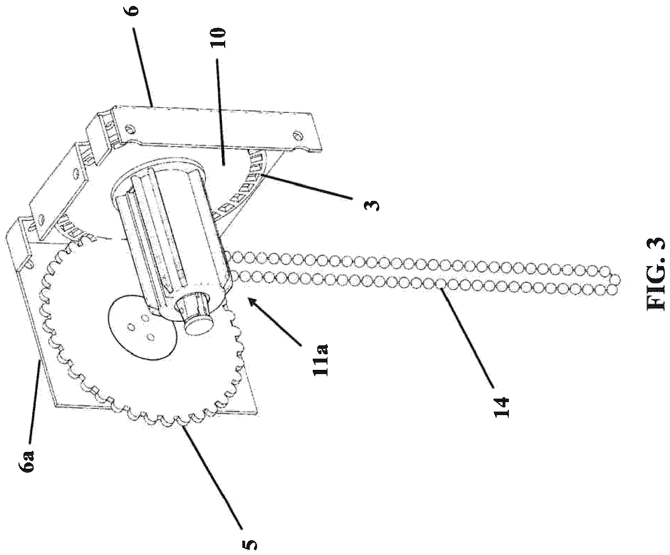

The second gear 5 is operatively engaged with the first gear 3 to transmit motion from the movement of the chain 14 into rotation of the roller 2. Preferably, the second gear 5 is a radial spur gear mounted on the frame 1 substantially at a 90° angle to the first gear 3 with the teeth of the first and second gears 3 and 5 engaged so as to rotationally couple the gears. Alternatively, the first and second gears 3 and 5 may be another type of angled or non-coaxial gear pairing. For example, the first and second gears 3 and 5 may be beveled gears, a crown gear, helical gears, a worm gear and spur gear, or a combination of gear types. Additionally, the first and second gears 3 and 5 are preferably positioned at a 90° angle to one another, as shown in Figures 2-4. Alternatively, the first and second gears 3 and 5 may be positioned with their axis of rotation parallel, but non-coaxial, or offset from one another, such that the second gear 5 is not positioned between the roller 2 and the end cap 6.

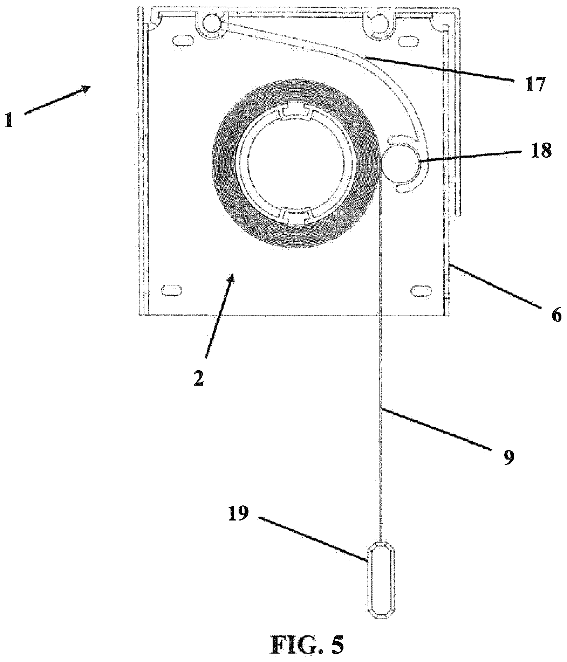

As shown in Figure 5, a fabric retaining assembly 17 may be mounted to the frame 1 above the roller 2, so as to rest on the fabric 9 of the roller 2. The fabric retaining assembly 17 may have a press bar 18 attached thereto, which makes contact with the surface of the fabric 9 on the roller 2. The press bar 18 is sized to extend substantially the entire length of the roller tube 8, but not to contact or interfere with the collars 10. As the fabric 9 is unwound and re-wound on the roller 2, the press bar 18 applies a force to the surface of the fabric 9 on the roller tube 8 to minimize or prevent any improper winding of the fabric 9, which can cause telescoping. Optionally, the press bar 18 may be rotatably mounted to the fabric retaining assembly 17, so as to act as a wheel and roll along the surface of the fabric 9. Preferably, the fabric retaining assembly 17 is pivotally attached to the cover 7 on the underside of the top of the cover 7 and hangs freely, or is spring-loaded, so as to rest on the fabric 9. Alternatively, the fabric retaining assembly 17 may be rigidly mounted to the cover 7, or formed integrally therewith, and be configured to engage the fabric 9 and bend slightly out of position, so as to apply a force to the surface of the fabric 9.

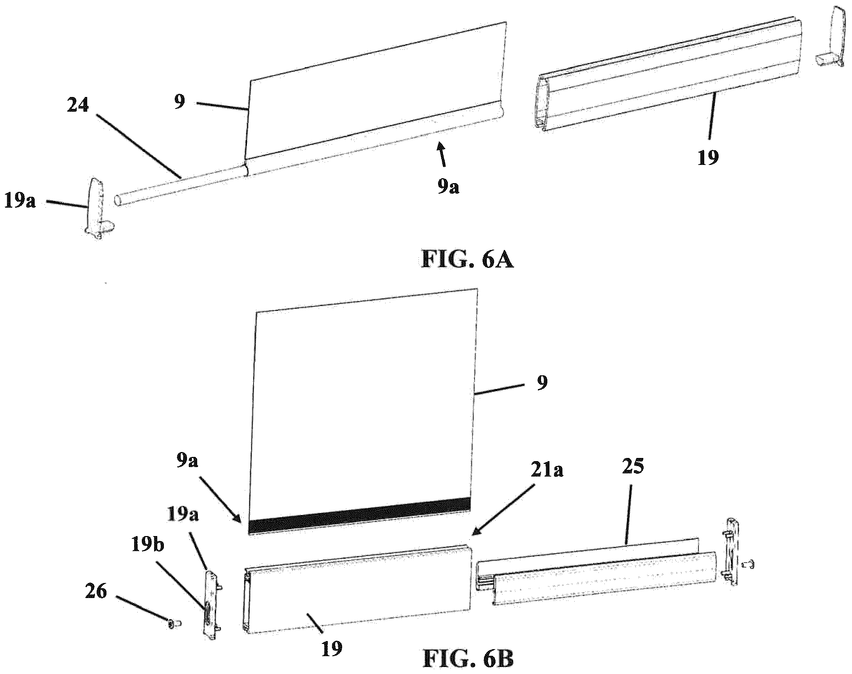

As shown in Figures 6A-8, the roller shade assembly may also include a self-adjusting bottom bar 19, to minimize or eliminate any gaps at the bottom of the window opening, in addition to reducing the gaps along the sides of the window opening. A weight 20 is attached to the lower end, or free end 9a, of the fabric 9 and is loosely retained within a generally U-shaped channel 21 extending the length of the bottom bar 19. The upper end 21a of the channel 21 is tapered inwardly and is sufficiently narrow to retain the weight 20 within the channel 21. The weight 20 is thereby permitted to move freely within the channel 21, but not to exit the channel 21. As a result, the bottom bar 19 is permitted to self-adjust when it contacts the bottom of the window opening, for example, to accommodate a slightly angled window sill.

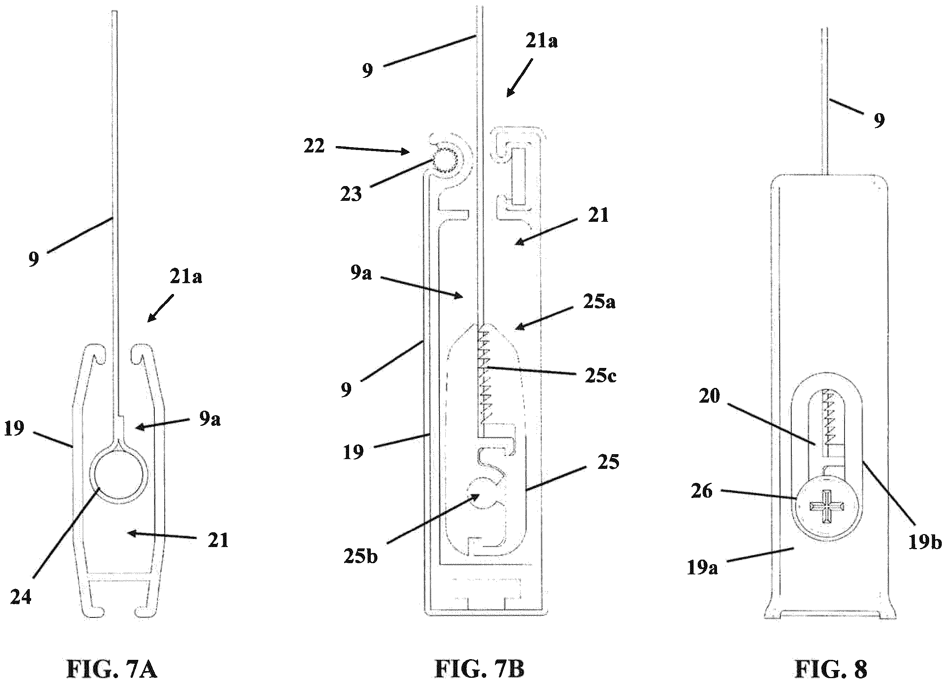

Optionally, the bottom bar 19 may configured to be wrapped in the same fabric 9 as is provided on the roller 2. As shown in Figure 7B, the bottom bar 19 has one or more grooves 22 in which a length of fabric 9 is retained by way of one or more rods 23. Preferably, the fabric 9 is placed into one of the grooves 22 and a rod 23 is snap-fitted or otherwise secured therein to frictionally retain the fabric 9 in place in the groove 22. The fabric 9 is then wrapped around the bottom bar 19 and the opposing end of the length of fabric 9 is placed into the other groove 22 and similarly retained therein by way of another rod 23. The fabric 9 may be wrapped around the substantially entire bottom bar 19, or only a portion thereof. The rod 23 may be any desired shape or material, so as to fit securely within the corresponding groove 22. The rod 23 may also be hollow, so as to more easily deform to facilitate snap-fitting into the groove 22.

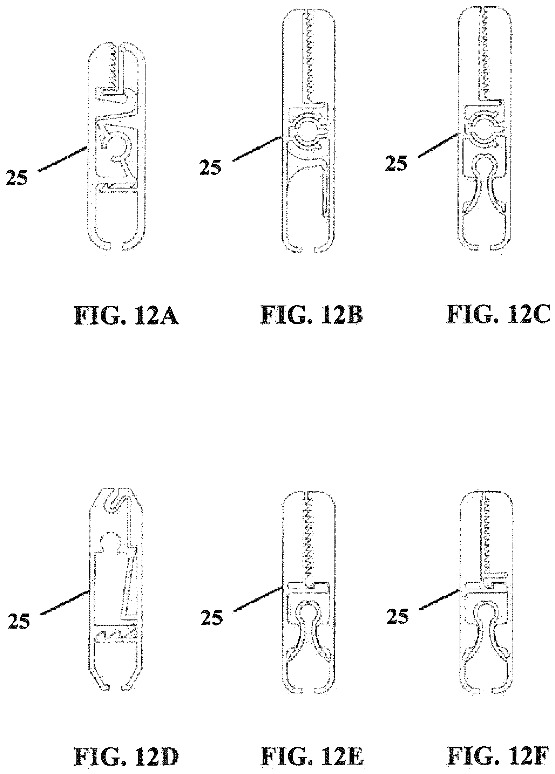

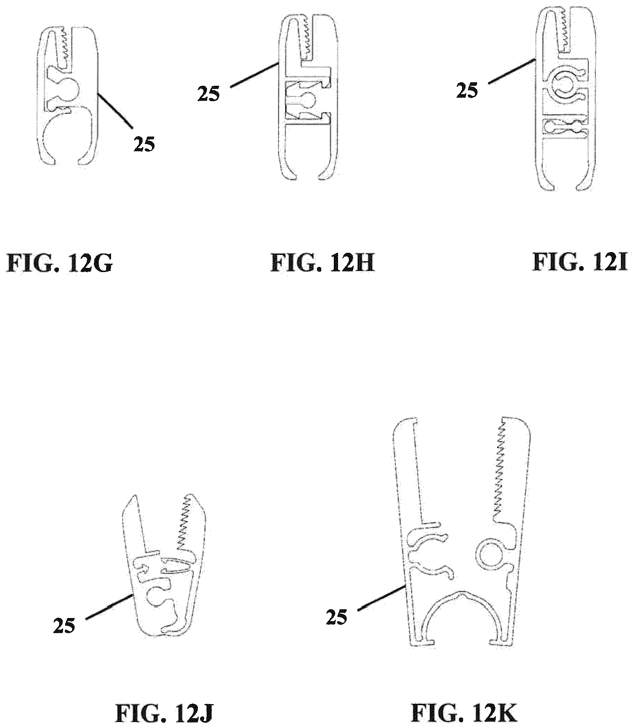

As shown in Figures 6A and 7A, the weight 20 may be a rod 24 to which the fabric 9 is attached and then rolled thereabout, so as to cover the weight 20 with the fabric 9. Preferably, as shown in Figures 6B and 7B, the weight 20 is a clip 25 having a grip portion 25a that attaches to and retains the free end 9a of the fabric 9 therein. The clip 25 has two opposing sections that lock together to clamp or grip the free end 9a of the fabric 9 and retain it in the grip portion 25a. The opposing sections of the clip 25 may lock together by way of a snap-fit, as shown for example in Figures 12A-K. Alternatively, the opposing sections of the clip may lock together by way of a cam-lock, wedge-lock, or other suitable locking mechanism.

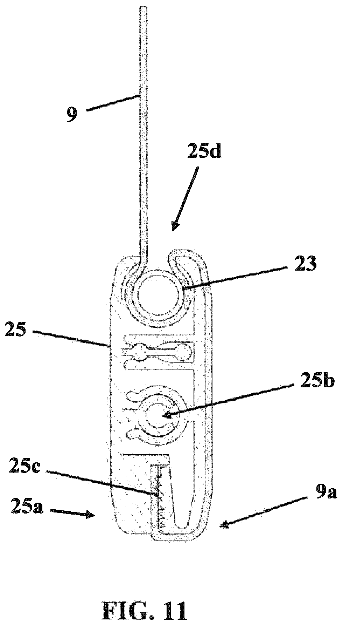

Preferably, the grip portion 25a has teeth 25c or other gripping elements, such as ridges or treads to facilitate gripping the free end 9a of the fabric 9. Optionally, one or both opposing sections of the clip 25 may have an adhesive, such as two-way tape, applied to the grip portion 25a thereof to assist in gripping the fabric 9. As shown in Figure 11 , the clip 25 may be wrapped in the fabric 9, similarly to the way the bottom bar 19 is wrapped. The clip 25 may have a groove 25d formed along the length of one, or both, opposing sections of the clip 25 in which a loop of the fabric 9 is retained by a rod 23. The fabric 9 passes from the grip portion 25a around the clip 25 and a loop of the fabric 9 is retained in the groove 25d by a rod 23 that may be snap-fitted into the groove 25d.

As shown in Figures 6 A and 6B, the bottom bar 19 may have caps 19a at either end. Preferably, both caps 19a have a slot-shaped aperture 19b therethrough. The clip 25 may have a recess 25b that is configured to receive a set screw 26 therein. The set screw 26 passes through the aperture 19b in the cap 19a and is inserted into the recess 25b in the clip 25. This permits the set screw 26 to be tightened at a desired position within the aperture 19b to selectively position the ends of the weight 20 within the channel 21. The angle of the bottom bar 19, relative to the free end 9a of the fabric 9 may thereby be selectively adjusted.

For example, during installation of the roller shade assembly, the set screws 26 on either end of the bottom bar 19 may be loose, so as to permit the weight 20 to move freely within the channel 21. The chain drive assembly 4 may be operated so as to lower the fabric 9 until the bottom bar contacts a window sill at the bottom of the window opening. If the window sill is not perfectly level, one end of the bottom bar 19 will make contact with the window sill before the other. If the fabric 9 is lowered further, the free end 9a of the fabric 9 and the weight 20 will continue to move downward, within the channel 21 until the other end of the bottom bar 19 contacts the window sill. The roller shade assembly could be operated in this way each time, so as to reduce or eliminate a gap at the bottom of the window opening, due to an angled window sill. Alternatively, when both ends of the bottom bar 19 contact the window sill, the set screws 26 on either end of the bottom bar 19 may be tightened to lock the weight 20 in position within the channel 21. The bottom bar 19 will then remain at the same angle, relative to the weight 20 when it is raised and again lowered, so as to make even contact with the angled window sill.

Numbered embodiments forming part of the description:
Embodiment 1: A roller shade assembly, for installation in a window opening, comprising:
   a frame having opposing first and second ends attached within the window opening; a roller rotatably mounted to the frame having opposing ends, a rotational axis, and a first gear coaxially attached to one end of the roller;
   a drive assembly attached to the frame between the first and second ends, having a second gear that is selectively rotatable and is operatively engaged with the first gear for imparting rotational motion from the drive assembly to the roller.
Embodiment 2: The roller shade assembly of embodiment 1, wherein the frame comprises a first end cap at the first end and a second end cap at the second end and a cover extending between the first and second end caps.
Embodiment 3: The roller shade assembly of embodiment 2, wherein the cover comprises a top and at least one side extending between the first and second end caps, and wherein the drive assembly is attached to one side of the cover.
Embodiment 4: The roller shade assembly of embodiment 2, wherein the first end cap has a flange extending inwardly therefrom toward the second end cap, and wherein the drive assembly is attached to the flange.
Embodiment 5: The roller shade assembly of embodiment 1, wherein the first gear substantially perpendicular to the second gear.
Embodiment 6: The roller shade assembly of embodiment 5, wherein the first gear is a disc-shaped gear with a plurality of slots adjacent its perimeter and the second gear is a spur gear.
Embodiment 7: The roller shade assembly of embodiment 1, wherein a fabric retaining assembly is mounted to the frame between the first and second ends so as to rest on the roller.
Embodiment 8: The roller shade assembly of embodiment 7, wherein the fabric retaining assembly has a press bar attached thereto extending parallel to the roller along substantially the entire length of the roller.
Embodiment 9: The roller shade assembly of embodiment 1 , wherein the roller has a sheet material rolled thereon with a fixed end attached to the roller and a free end having a weight attached thereto.
Embodiment 10: The roller shade assembly of embodiment 9, comprising a bottom bar extending along the free end of the sheet material and having a channel extending the length of the bottom bar with an upper end, wherein the weight is loosely retained within the channel, and wherein the channel is sized to permit the weight to move within the channel, and wherein the upper end of the channel is sized to prevent the weight from exiting the channel.
Embodiment 11: The roller shade assembly of embodiment 10, wherein the weight is a rod attached to the free end of the sheet material.
Embodiment 12: The roller shade assembly of embodiment 10, wherein the weight is a clip having a grip portion that attaches to and retains the free end of the sheet material therein.
Embodiment 13: The roller shade assembly of embodiment 12, wherein the clip has two opposing sections that are shaped complementary to one another so as to lock together to grip the free end of the sheet material and retain it in the grip portion of the clip.
Embodiment 14: The roller shade assembly of embodiment 13, wherein the clip locks together by way of a snap- fit.
Embodiment 15: The roller shade assembly of embodiment 13, wherein the clip locks together by way of a cam- lock.
Embodiment 16: The roller shade assembly of embodiment 10, wherein the bottom bar has one or more grooves thereon configured to retain a length of sheet material therein to permit the bottom bar to be at least partially wrapped in the length of sheet material.
Embodiment 17: The roller shade assembly of embodiment 10, wherein the bottom bar has caps at either end thereof having a slot-shaped aperture for receiving a set screw therethrough, and wherein the set screw may be selectively tightened to position the weight within the channel.
Embodiment 18: The roller shade assembly of embodiment 1, wherein the drive assembly is a chain drive assembly.
Embodiment 19: The roller shade assembly of embodiment 1, wherein the drive assembly is a ratchet-style retractable cord drive assembly.
Embodiment 20: The roller shade assembly of embodiment 1, wherein the drive assembly is a motorized drive assembly.
Embodiment 21: A roller shade assembly, for installation in a window opening, comprising:
   a frame having opposing first and second ends attached within the window opening; a roller rotatably mounted to the frame having opposing ends; and
   a flange extending radially outwardly from the roller at each end of the roller.
Embodiment 22: The roller shade assembly of embodiment 21, wherein a fabric retaining assembly is mounted to the frame between the first and second ends so as to rest on the roller. Embodiment 23: The roller shade assembly of embodiment 22, wherein the fabric retaining assembly has a press bar attached thereto extending parallel to the roller along substantially the entire length of the roller.
Embodiment 24: The roller shade assembly of embodiment 21, wherein the roller has a sheet material rolled thereon with a fixed end attached to the roller and a free end having a weight attached thereto.
Embodiment 25: The roller shade assembly of embodiment 24, comprising a bottom bar extending along the free end of the sheet material and having a channel extending the length of the bottom bar with an upper end, wherein the weight is loosely retained within the channel, and wherein the channel is sized to permit the weight to move within the channel, and wherein the upper end of the channel is sized to prevent the weight from exiting the channel.
Embodiment 26: The roller shade assembly of embodiment 25, wherein the weight is a clip having a grip portion and two opposing sections that are shaped complementary to one another so as to lock together to grip the free end of the sheet material and retain it in the grip portion of the clip.
Embodiment 27: A self-adjusting bottom bar, for mounting to the free end of the sheet material of a roller shade assembly, comprising:
   a weight attached to the free end of the sheet material;
   a U-shaped channel extending the length of the bottom bar with an upper end, wherein the weight is loosely retained within the channel, and wherein the channel is sized to permit the weight to move within the channel, and wherein the upper end of the channel is sized to prevent the weight from exiting the channel.
Embodiment 28: The self-adjusting bottom bar of embodiment 27, wherein the weight is a clip having a grip portion and two opposing sections that are shaped complementary to one another so as to lock together to grip the free end of the sheet material and retain it in the grip portion of the clip.
Embodiment 29: A clip for attachment to the free end of the sheet material of a roller shade assembly, comprising, two opposing sections that extend along the free end of the sheet material and are shaped complementary to one another so as to lock together to form a grip portion, and wherein the grip portion grips the free end of the sheet material and retains it in the grip portion of the clip.
Embodiment 30: The clip of embodiment 29, wherein the grip portion has gripping elements on at least one of the two opposing section, configured to grip the free end of the sheet material.
Embodiment 31: The clip of embodiment 30, having a groove formed along the length of the clip configured to receive and retain a loop of the sheet material therein.

The present invention has been described with reference to exemplary embodiments, however, it will be understood by those skilled in the art that various changed may be made and equivalents may be substituted for elements thereof without departing from the scope of the invention as set out in the following claims. Therefore, it is intended that the invention not be limited to the particular embodiments disclosed herein.

## Claims

1. A clip for attachment to the free end of the sheet material of a roller shade assembly, comprising, two opposing sections that extend along the free end of the sheet material and are shaped complementary to one another so as to lock together to form a grip portion, and wherein the grip portion grips the free end of the sheet material and retains it in the grip portion of the clip.

2. The clip of claim 1, wherein the grip portion has gripping elements on at least one of the two opposing section, configured to grip the free end of the sheet material.

3. The clip of claim 2, having a groove formed along the length of the clip configured to receive and retain a loop of the sheet material therein.
